# EUROPÄISCHE PATENTSCHRIFT

(11) **EP 3 032 154 B1**
(45) Veröffentlichungstag und Bekanntmachung des Hinweises auf die Patenterteilung: **27.06.2018**
(21) Anmeldenummer: 15198580.1
(22) Anmeldetag: 09.12.2015
(51) Int. Cl.: F16L 3/10, H02G 3/32

(54) **VERBINDUNGSANORDNUNG MIT EINER SCHELLE UND EINEM TRÄGER ZUR BEFESTIGUNG EINER LEITUNG, INSBESONDERE STROMFÜHRENDEN LEITUNG, AN EINEM SCHIENENFAHRZEUG**
CONNECTION ASSEMBLY WITH A CLAMP AND A SUPPORT FOR FIXING A LINE, IN PARTICULAR A POWER LINE, TO A RAILWAY VEHICLE
ENSEMBLE DE CONNEXION AVEC UN COLLIER ET UN SUPPORT POUR LA FIXATION D'UNE LIGNE, EN PARTICULIER UNE LIGNE ELECTRIQUE, SUR UN VEHICULE FERROVIAIRE

(30) Priorität: 12.12.2014 DE 102014118499
(43) Veröffentlichungstag der Anmeldung: 15.06.2016
(73) Patentinhaber: Bombardier Transportation GmbH, 10785 Berlin (DE)
(72) Erfinder: Glomb, Christian, 16766 Kremmen (DE)
(74) Vertreter: Cohausz & Florack

(56) Entgegenhaltungen:
- EP-A1- 0 841 512
- DE-A1-102010 022 248
- DE-C- 811 763
- DE-C1- 3 808 334
- DE-U1- 8 323 916
- DE-U1- 9 104 130
- DE-U1- 9 402 626
- GB-A- 239 390
- US-A- 6 041 823

## Beschreibung

Die vorliegende Erfindung betrifft eine Verbindungsanordnung zur Befestigung einer Leitung, insbesondere stromführenden Leitung, an einem Schienenfahrzeug, mit einer Schelle und einem Träger, an dem die Schelle befestigt ist.

Durch die steigenden sicherheitstechnischen Anforderungen im Schienenfahrzeugbau ist es notwendig, die Leitungsverlegung, gerade von Hochspannungsleitungen, aber auch anderer Zugsammelschienen-Leitungen, mit stabil ausgeführtem Befestigungsmaterial zu realisieren. Das bedeutet eine nach Normlage feste Verlegung von Leitungen, horizontal mit Fixpunkten üblicherweise in einem Abstand von ca. 300 - 400 mm, in einer mechanischen Kabelrinne (einem rinnenförmigen Träger, das heißt Träger mit einem Boden und Seitenwänden) oder freier Verlegung am Fahrzeug.

Die freie Verlegung wurde ursprünglich mit massiven Blockschellen ausgeführt und hatte somit einen hohen Montageaufwand und großen Platzbedarf zur Folge. Gerade in der Leitungsverlegung unterflur am Schienenfahrzeug ist der Installationsraum aber stark begrenzt und erfordert zwischen den entsprechenden Spannungskategorien, aufgrund des begrenzten Installationsraums, zusätzliche Abschirmmaßnahmen. Diese Abschirmmaßnahmen müssen den Richtlinien und Normen der elektromagnetischen Verträglichkeit (EMV-Richtlinien und -Normen) entsprechen.

Aus diesem Grund werden elektrische Kabelleitern als Vormontagebaugruppen eingesetzt, bei denen alle EMV-Maßnahmen realisiert sind, wobei die Zugänglichkeit am Fahrzeug selbst nur noch von unten gegebenen ist. Da Hochspannungsleitungen vom Dach kommend von oben nach unten montiert werden und diese in einer EMV-Kabelführung verlegt werden müssen, ist hier die Zugänglichkeit in der Montage eingeschränkt und nur mit vorgerüsteten Befestigungselementen an der Leitung von unten möglich.

Bei Schienenfahrzeugen sehen konventionelle Lösungen der Leitungsverlegung von Hochspannungsleitungen eine separate Verlegung mit Blockschellen oder mit einem Schutzrohr vor. Blockschellen benötigen aufgrund der zwei Befestigungsschrauben einen erhöhten Aufwand an Befestigungselementen und Halterungs- und Anschweißteilen am Fahrzeug. Blockschellen haben weiterhin einen größeren Platzbedarf als normale Rohrschellen. Die notwendige EMV-Abschirmung und/oder der mechanische Schutz der Leitung über eine separate im Rohr verlegte Leitung ist masseintensiv und hat durch diese Verlegeart einen erhöhten Leitungsquerschnitt zur Folge, da hier höhere Leitungstemperaturen zu erwarten sind. Somit waren bisher relativ große Querschnitte, gerade der Hochspannungsleitungen, beispielsweise von ca. 95 mm² notwendig.

Aus dem Stand der Technik sind unterschiedliche Typen von Schellen bekannt.

So beschreibt die DE 20 2012 101 587 U1 eine Klemmschelle mit zwei zueinander verschwenkbaren Schellenteilen, die jeweils einen schalenförmigen Abschnitt und einen radial nach außen hervorstehenden Befestigungsabschnitt aufweisen. An der den Befestigungsabschnitten gegenüberliegenden Seite sind die beiden Schellenteile über ein Scharnier miteinander verbunden. Die Befestigungsabschnitte sind so geformt, dass sie bei einer Bewegung von einer Offenstellung der Schelle in eine Schließstellung in Form einer Schnappverbindung zusammen wirken. Bei einer Schnappverbindung verformt sich zumindest eines der aneinander vorbeigeführten Elemente in elastischer Weise und federt nach dem Vorbeiführen wieder zurück, sodass ein Formschluss in Richtung von der Schließstellung zur Offenstellung besteht. Die beiden derart zusammen wirkenden Elemente bilden zusammen einen Schnappverschluss. Bei dem bekannten Stand der Technik wird der Schnappverschluss von hakenförmigen Endabschnitten jedes der beiden Befestigungsabschnitte gebildet, wobei die Haken so geformt sind, dass sie in Richtung von der Offenstellung in die Schließstellung aneinander vorbei geführt werden können, um eine Schnappverbindung einzugehen, in der Gegenrichtung aber ineinander greifen (verhaken) und dadurch nicht aneinander vorbei geführt werden können. Letzteres bedeutet, dass die Schnappverbindung nicht allein durch Bewegen der beiden Schellenteile von der Schließstellung in die Offenstellung gelöst werden kann, sondern zusätzliche Maßnahmen, unter anderem das Zurückbiegen eines der hakenförmigen Elemente mit einem Werkzeug, notwendig sind. In der zuvor beschriebenen verhakten Stellung findet eine Vorfixierung der Schelle an der darin eingelegten Leitung statt. Die endgültige Fixierung wird über eine Schraube erreicht, die durch entsprechende Öffnungen in den Befestigungsabschnitten geführt ist, wobei einer der Befestigungsabschnitte über ein mit der Schraube zusammen wirkendes Innengewinde verfügen kann.

Die EP 1158 233 A2 beschreibt eine Schlauch- oder Rohrschelle, die ebenfalls aus zwei Schellenteilen mit jeweils einem schalenförmigen Abschnitt und einem Befestigungsabschnitt besteht, wobei die Schellenteile über ein Scharnier schwenkbar miteinander verbunden sind und wobei die Befestigungsabschnitte in der Schließstellung der Schelle mittels einer Schraube zusammen gedrückt werden. Die Schelle kann zusammen mit der darin geführten Leitung an einem Träger montiert (befestigt) werden. Dabei liegt einer der Befestigungsabschnitte an dem Träger an und eine Schraube wird aus Richtung des anderen der Befestigungsabschnitte durch zwei in den Befestigungsabschnitten vorgesehene Öffnungen in eine Gewindebohrung in dem Träger geschraubt.

Die EP 2 251579 A1 beschreibt eine Schelle, die aus einem durchgehenden, kreisförmig gebogenen Halteband besteht, wobei an den beiden Enden des Haltebands jeweils ein nach außen weisender Vorsprung mit einer Öffnung vorgesehen ist, wobei zum Schließen der Schelle eine Schraube durch die beiden Öffnungen geführt werden kann, die mit einer separaten Mutter zusammen wirkt.

Aus der WO 2007/141074 A1 ist eine Rohrschelle bekannt, die aus zwei miteinander über ein Scharnier verbundenen Schellenteilen besteht, die ebenfalls jeweils einen schalenförmigen Abschnitt und einen Befestigungsabschnitt aufweisen. In der Schließstellung liegen die beiden schalenförmigen Abschnitte aneinander an und werden durch Erzeugen einer Durchsetzfügung fest und unlösbar miteinander verbunden.

Die GB 239 390 A offenbart eine Schelle, zu deren Befestigung zunächst ein Bolzen durch Verschrauben in der Wand verankert, anschließend die Schelle im geschlossenen Zustand auf das obere Bolzenende, das mit einem Außengewinde versehen ist, gesteckt und schließlich eine Mutter mit dem Bolzenende verschraubt wird.

Die DE 91 04 130 U1 offenbart eine Schelle mit einem Befestigungsabschnitt mit angeformtem Gewinde, wobei die Schelle ortsfest über eine separate angeformte Mutter 13 an einem Träger befestigt wird und dann erst die Befestigungsabschnitte miteinander verschraubt werden.

Bei einem Schienenfahrzeug ist keine der zuvor genannten Schellen unter Berücksichtigung der speziellen Gegebenheiten (Zugänglichkeit am Fahrzeug nur von unten, stark begrenzter Installationsraum, EMV-konforme Kabelführung) dazu geeignet, eine Hochspannungsleitung auf einfache Weise am Fahrzeug zu montieren.

Es ist daher eine Aufgabe der vorliegenden Erfindung, eine Verbindungsanordnung zu schaffen, die die Montage einer stromführenden Leitung an einem Schienenfahrzeug in einfacher Weise ermöglicht.

Erfindungsgemäß ist eine Verbindungsanordnung zur Befestigung einer Leitung, insbesondere stromführenden Leitung, zum Beispiel Hochspannungsleitung, an einem Schienenfahrzeug, mit einer Schelle und einem Träger, an dem die Schelle befestigt ist, vorgesehen, wobei die Schelle ein erstes Schellenteil, das einen ersten schalenförmigen Abschnitt und einen daran anschließenden ersten, insbesondere laschenförmigen, Befestigungsabschnitt aufweist, wobei die Schelle ein zweites Schellenteil, das einen zweiten schalenförmigen Abschnitt und einen daran anschließenden zweiten, insbesondere laschenförmigen, Befestigungsabschnitt aufweist, wobei das erste und zweite Schellenteil, insbesondere über ein Scharnier, miteinander verbunden und relativ zueinander (z.B. um eine Scharnierachse) zwischen einer Offenstellung und einer Schließstellung schwenkbar sind, wobei der erste und zweite schalenförmige Abschnitt in der Schließstellung zusammen einen Aufnahmeraum (für die Leitung) umschließen, wobei sich der erste und zweite Befestigungsabschnitt (in der Schließstellung) radial außerhalb des Aufnahmeraums erstrecken und miteinander verbindbar ausgestaltet sind und wobei der erste Befestigungsabschnitt einen, insbesondere ebenen, Montageabschnitt aufweist, der eine von dem zweiten Befestigungsabschnitt wegweisende Montagefläche umfasst, die ein Auflager zur Festlegung der Schelle bildet, dadurch gelöst, dass in der Schließstellung eine Projektion der Montagefläche in einer zur Montagefläche senkrechten Richtung (Richtung vom ersten zum zweite Befestigungsabschnitt) den Aufnahmeraum schneidet.

Erfindungsgemäß ist vorgesehen, dass der erste und zweite schalenförmige Abschnitt in der Schließstellung zusammen einen Ring bilden, der einen Aufnahmeraum (für die Leitung) umschließt, wobei sich der erste und zweite Befestigungsabschnitt (in der Schließstellung) radial außerhalb des Rings erstrecken. In diesem Fall ist denkbar, dass die Montagefläche des Montageabschnitts des ersten Befestigungsabschnitts in einer Ebene liegt, die radial außerhalb des Rings verläuft.

Erfindungsgemäß ist vorgesehen, dass der erste und zweite Befestigungsabschnitt jeweils eine Öffnung (Aussparung oder Bohrung) aufweisen, wobei die Öffnungen in der Schließstellung miteinander fluchten. Weiterhin ist an einem der Befestigungsabschnitte, insbesondere dem zweiten Befestigungsabschnitt, ein zu der Öffnung dieses Befestigungsabschnitts koaxiales Innengewinde, vorgesehen.

Mit der "Offenstellung" ist eine Stellung gemeint, in der die beiden Schellenteile relativ zueinander soweit (insbesondere um die Scharnierachse) auseinander geschwenkt sind, dass eine Leitung mit einem Außendurchmesser, der der Querschnittslänge des Aufnahmeraums bzw. dem Innendurchmesser des Rings entspricht, in die Schelle eingelegt werden kann. Mit der "Schließstellung" ist eine Stellung gemeint, in der die beiden Schellenteile relativ zueinander so angeordnet sind, dass sie eine eingelegte Leitung mit einem Außendurchmesser, der dem Querschnitt des Aufnahmeraums bzw. Innendurchmesser des Rings entspricht, nahezu vollständig umschließen und/oder berühren (würden] und die beiden Öffnungen in den Befestigungsabschnitten exakt miteinander fluchten, deren Mittelachsen also koaxial zueinander verlaufen, wodurch ein Befestigungsmittel, insbesondere eine Schraube, durch die beiden Öffnungen geführt werden kann.

Mit einem "Ring" ist insbesondere ein Kreisring gemeint, wobei andere Querschnittsformen grundsätzlich auch denkbar sind. Der Ring ist nicht zwingend vollständig geschlossen, sondern kann in der Schließstellung zwischen den Enden der schalenförmigen Abschnitte, an die der jeweilige Befestigungsabschnitt angrenzt, eine Lücke aufweisen. Denkbar ist aber auch, dass sich in der Schließstellung besagte Enden der schalenförmigen Abschnitte berühren, sodass die schalenförmigen Abschnitte einen geschlossenen Ring bilden. Der von den beiden schalenförmigen Abschnitten gebildete Ring verläuft um eine Mittelachse, die die axiale Richtung der Schelle und des Rings definiert.

Die Montagefläche ist die Fläche, über die das erste Schellenteil an einem Träger, beispielsweise an einem Gerüst einer Kabelleiter oder dem Boden einer Kabelrinne, montiert (befestigt) wird/ist. Dabei muss die Montagefläche des Befestigungsabschnitts den Träger nicht unmittelbar berühren, sondern zwischen Montagefläche und Oberfläche des Trägers kann auch eine Sicherungsscheibe bzw. Unterlegscheibe vorgesehen sein. Letztere kann mit der Montagefläche fest, beispielsweise stoffschlüssig, formschlüssig oder kraftschlüssig, verbunden sein. Die Montagefläche verläuft insbesondere senkrecht zur Mittelachse der Öffnung des ersten Befestigungsabschnitts und/oder senkrecht zur Verlaufsrichtung eines durch die Öffnungen der Befestigungsabschnitte in der Schließstellung geführten Befestigungsmittels, z.B. einer Schraube.

Mit einer Projektion ist eine gedachte Verlängerung der die Montagefläche umgrenzenden Linien in zur Montagefläche senkrechter Richtung gemeint. Diese gedachte Verlängerung bzw. das davon eingegrenzte Volumen schneidet erfindungsgemäß (in der Schließstellung) den Aufnahmeraum bzw. überlappt mit diesem. Auf diese Weise ist die Montagefläche, wenn diese als nach unten weisend definiert ist, zumindest abschnittsweise, gegebenenfalls sogar vollständig, unter dem Aufnahmeraum angeordnet.

Indem der erste Befestigungsabschnitt einen Montageabschnitt aufweist, dessen senkrechte Projektion in Richtung vom ersten zum zweiten Befestigungsabschnitt den Aufnahmeraum schneidet, wodurch die Montagefläche und gegebenenfalls auch der Großteil oder montagerelevante Teil zumindest des ersten Befestigungsabschnitts unter dem Aufnahmeraum liegt, wird eine besonders einfache Befestigung der Leitungen ermöglicht, da für eine Befestigung an einem Träger, beispielsweise an dem Gerüst einer Kabelleiter oder an einer Kabelrinne, die Zugänglichkeit nur von einer Seite des Trägers notwendig ist.

Bei einem Träger mit Seitenwänden und einem Boden kann die Schelle der erfingungsgemäßen Verbindungsanordnung auf einfache Weise von oben in den von den Seitenwänden und dem Boden begrenzten Raum eingesetzt werden und zur Befestigung braucht der Monteur lediglich von der Trägerunterseite aus die Befestigungsabschnitte, z.B. mittels eines Befestigungsmittels wie einer Schraube, am Träger fixieren, ohne dazu in den Bereich zwischen den Seitenwänden hineingreifen zu müssen. Dies hat wiederum den Vorteil, dass die Trägerbreite bzw. der Abstand der Seitenwände des Trägers minimiert werden kann, insbesondere so, dass die Trägerbreite bzw. der Abstand der Seitenwände den äußeren Abmessungen der Schelle entspricht, was wiederum Material und Gewicht spart. Besagte Montagefläche kann dabei in einer radial außerhalb des Aufnahmeraums verlaufenden Ebene liegen, was die Montage weiter vereinfacht.

Die Schelle kann unmittelbar über die Befestigungsabschnitte an dem Träger montiert werden. Dabei ist erfindungsgemäß durch das koaxiale Innengewinde an einem der Befestigungsabschnitte, insbesondere am zweiten Befestigungsabschnitt, gleichzeitig eine Möglichkeit vorgesehen, durch alleinige Verwendung eines einzelnen Befestigungsmittels, z.B. einer Schraube, gegebenenfalls mit einer zusätzlichen Sicherungsscheibe bzw. Unterlegscheibe, die Schelle mit der darin geführten Leitung am Träger zu befestigen bzw. anzuschrauben. Durch das Befestigen bzw. Anschrauben am Träger wird gleichzeitig die Schelle in die Schließstellung gebracht bzw. in der Schließstellung endgültig fixiert und dadurch die Leitung festgeklemmt. Durch die Schelle der erfindungsgemäßen Verbindungsanordnung wird ein Einlegen bzw. Montieren einer Leitung in eine Kabelrinne, die am Schienenfahrzeug vorkonfektioniert montiert werden kann, ermöglicht. Der vorkonfektionierte Träger bzw. die Kabelrinne ist dabei insbesondere am Fahrzeug, beispielsweise im Unterflurbereich, vormontiert, wobei die Schelle der erfindungsgemäßen Verbindungsanordnung die nachträgliche Befestigung der Leitung auf einfache Weise ermöglicht. Zusätzliche mechanische Kabelschutzrohre oder Trassen müssen nicht vorgesehen werden, da dieser Raum in der vorgefertigten Kabelrinne bzw. Kabelleiter vorgehalten ist.

Erfindungsgemäß wird also eine Möglichkeit für eine sichere Befestigung von Kabelmaterial bzw. Mantelleitungen in der elektrischen Leitungsverlegung, im Besonderen zur Befestigung von Hochspannungsleitungen, geschaffen, wobei eine breite Fixierung der Leitung aufgrund der auftretenden Kräfte im Betrieb realisiert wird.

Erfindungsgemäß schneidet die Projektion der Öffnung des ersten Befestigungsabschnitts entlang ihrer Mittelachse (Projektionsfläche der Öffnung entlang ihrer Mittelachse) den Ring in der Schließstellung. Gemäß einer Ausgestaltung der erfindungsgemäßen Schelle schneidet die Mittelachse der Öffnung des ersten Befestigungsabschnitts den Ring in der Schließstellung. Der kürzeste Abstand zwischen der Mittelachse der Öffnung und/oder Projektion der Öffnung entlang ihrer Mittelachse und einer dazu parallelen Ebene, die durch die Mittelachse des Rings verläuft, ist also insbesondere kleiner als der kürzeste Abstand zwischen der Mittelachse des Rings und der Außenfläche des zweiten Schellenteils. Auf diese Weise werden die Abmessungen der Schelle minimiert, sodass eine Leitung auf relativ engem Raum, insbesondere in einer schmalen Kabelrinne bzw. Kabelleiter montiert werden kann. Dabei kann der kürzeste Abstand der Ebene, durch die die Montagefläche verläuft, zu der Mittelachse des Rings insbesondere höchstens 1,8 mal, bevorzugt höchstens 1,6 mal, besonders bevorzugt höchstens 1,4 mal, so groß wie der kürzeste Abstand zwischen der Mittelachse des Rings und der Innenfläche des ersten Schellenteils sein. Auf diese Weise werden die Dimensionen der Schelle weiter reduziert.

Gemäß einer weiteren Ausgestaltung der Schelle der erfindungsgemäßen Verbindungsandordnung ist der Befestigungsabschnitt, an dem die Befestigungsschnittstelle bzw. das Innengewinde vorgesehen ist, der zweite Befestigungsabschnitt, also der Befestigungsabschnitt, der nicht die Anlagefläche aufweist. Bei einer solchen Anordnung lässt sich die Schelle mit der darin geführten Leitung zunächst auf einen Träger, insbesondere in eine Kabelrinne, setzen und dann daran befestigen, indem von unterhalb des Trägers bzw. des Rinnenbodens ein Befestigungsmittel, z.B. eine Schraube, zunächst durch eine Öffnung im Träger bzw. Rinnenboden geführt wird, dann durch eine Öffnung im ersten Befestigungsabschnitt und schließlich durch eine Öffnung im zweiten Befestigungsabschnitt bis zur Befestigungsschnittstelle bzw. bis in das Innengewinde. Das Befestigungsmittel wirkt dann senkrecht zur Montagefläche haltend mit der Befestigungsschnittstelle zusammen.

Gemäß einer weiteren Ausgestaltung der Schelle der erfindungsgemäßen Verbindungsanordnung ist die Befestigungsschnittstelle bzw. das Innengewinde Teil der Öffnung in dem Befestigungsabschnitt, die Öffnung ist also mit der Befestigungsschnittstelle bzw. dem Innengewinde versehen. Alternativ ist die Befestigungsschnittstelle bzw. das Innengewinde in einer Gewindemuffe vorgesehen, die an dem Befestigungsabschnitt, insbesondere an der in der Schließstellung von dem anderen Befestigungsabschnitt wegweisenden Seite, angeordnet ist. In diesem Fall ist die Befestigungsschnittstelle bzw. das Innengewinde also nicht Teil der Öffnung in dem Befestigungsabschnitt, sondern die Befestigungsschnittstelle bzw. das Innengewinde ist Teil einer dazu koaxialen Öffnung in einem separaten Element, das unmittelbar an den Befestigungsabschnitt angrenzt bzw. auf diesen aufgesetzt ist. Die Verbindung der Gewindemuffe mit dem Befestigungsabschnitt ist insbesondere eine stoffschlüssige Verbindung. Alternativ oder zusätzlich kann die Verbindung zwischen Gewindemuffe und Befestigungsabschnitt auch formschlüssig oder kraftschlüssig sein.

Gemäß noch einer Ausgestaltung der Schelle der erfindungsgemäßen Verbindungsanordnung ist vorgesehen, dass der erste und zweite Befestigungsabschnitt in der Schließstellung zusammen eine Schnappverbindung bilden (eingehen). Eine Schnappverbindung ist eine formschlüssige Verbindung, die allein durch Bewegen der Schellenteile relativ zueinander von der Offenstellung in die Schließstellung erzeugt wird. Der erste und zweite Befestigungsabschnitt wirken also als Schnappverschluss zusammen. Die Schnappverbindung bzw. der Schnappverschluss ist insbesondere allein durch Bewegen der Schellenteile relativ zueinander von der Schließstellung in die Offenstellung lösbar. Zum Öffnen der Schelle ist also nur die relative Schwenkbewegung zwischen den Schellenteilen nötig.

Wenn das erste Schellenteil von der Offenstellung in die Schließstellung oder von der Schließstellung in die Offenstellung geschwenkt wird, kommt also ein elastischer Teil des einen Befestigungsabschnitts mit einem Teil des daran vorbei geführten anderen Befestigungsabschnitts, insbesondere der endseitigen Kante des anderen Befestigungsabschnitts, in Kontakt, wodurch der elastische Teil zurück federt und dadurch zulässt, dass der andere Befestigungsabschnitt vorbei geführt werden kann. Der elastische Teil ist insbesondere ein federnd gelagerter und/oder elastischer Vorsprung, der in dem jeweiligen Befestigungsabschnitt geformt ist. Mit anderen Worten weist einer der Befestigungsabschnitte einen elastischen Endabschnitt auf, der in die Bewegungsbahn des anderen Befestigungsabschnitts, insbesondere in die Bewegungsbahn der äußeren Kante des anderen Befestigungsabschnitts, hineinragt. Vorzugsweise ist der elastische Endabschnitt S-förmig gebogen, also zweifach gebogen, wobei die eine der beiden Biegungen den Vorsprung bildet, der durch die Bewegung der beiden Schellenteile relativ zueinander zurückfedert, wenn der jeweils andere Befestigungsabschnitt an diesem Vorsprung vorbeigeführt wird. Erfindungsgemäß wird auf diese Weise eine einfache Möglichkeit geschaffen, die Schelle um eine Leitung zu legen und zunächst vorzufixieren. In dem vorfixierten Zustand kann die Schelle gegebenenfalls noch entlang der Leitung verschoben werden, kann sich aber nicht mehr unbeabsichtigt von der Leitung lösen. Eine Vorfixierung ist beispielsweise dann von Vorteil, wenn die Leitung mit der Schelle in eine relativ schmale Kabelrinne eingesetzt werden soll, die mit Unterbrechungen bzw. Eingriffslücken versehen ist. Im Bereich dieser Unterbrechungen bzw. Eingriffslücken kann die Schelle auf die Leitung gesetzt und vorfixiert werden, wobei dann die gesamte Leitung mit der Schelle in der Kabelrinne oder nur die Schelle entlang der Leitung in der Kabelrinne bis zu einer Position bewegt wird, an der die Schelle mit der Kabelrinne verschraubt werden soll. Das Verschrauben führt dann zur endgültigen Fixierung der Leitung innerhalb der Schelle sowie der Leitung und Schelle am Träger, zum Beispiel an der Kabelrinne.

Gemäß noch einer Ausgestaltung der Schelle der erfindungsgemäßen Verbindungsanordnung ist einer der schalenförmigen Abschnitte, insbesondere der schalenförmige Abschnitt des ersten Schellenteils, mit einem Distanzwiderlager verbunden, das sich radial außerhalb des Aufnahmeraums, insbesondere radial außerhalb des Rings, erstreckt. Bei dem Distanzwiderlager handelt es sich insbesondere um einen Vorsprung, der aus der Ringform hervorsteht. Ein Distanzwiderlager kann eine axiale Verdrehung der Schelle beispielsweise dann verhindern, wenn die Schelle an der Leitung vormontiert (vorfixiert) ist und innerhalb einer Kabelrinne, gegebenenfalls zusammen mit der Leitung, in axialer Richtung verschoben werden soll. Insbesondere erstreckt sich das Distanzwiderlager ausgehend von dem schalenförmigen Abschnitt, mit dem es verbunden ist, in eine Richtung weg von dem an dem schalenförmigen Abschnitt anschließenden Befestigungsabschnitt. Vorzugsweise erstreckt sich die äußere Kante des Distanzwiderlagers, das heißt die vom Ringkörper entfernte Kante, zumindest bis zu der Ebene, in der die Montagefläche des ersten Befestigungsabschnitts verläuft. Das Distanzwiderlager kann von einem aus dem Material des schalenförmigen Abschnitts radial nach außen herausgedrückten Materialteil bestehen. Insbesondere handelt es sich um einen streifenförmigen, vorzugsweise ebenen, Abschnitt, der beispielsweise mittig aus dem schalenförmigen Abschnitt radial nach außen herausgedrückt ist. Durch das Herausdrücken entsteht in dem schalenförmigen Abschnitt, also in dem Bandmaterial des schalenförmigen Abschnitts, ein Materialausschnitt. Dabei ist das Distanzwiderlager insbesondere durch einen Stanzschnitt und anschließendes Umbiegen des das Distanzwiderlager bildenden Abschnitts erzeugt worden.

Gemäß noch einer Ausgestaltung der Schelle der erfindungsgemäßen Verbindungsanordnung sind der schalenförmige Abschnitt und der Befestigungsabschnitt des ersten und/oder zweiten Schellenteils zusammen einstückig ausgebildet. Insbesondere sind auch das Distanzwiderlager und der übrige schalenförmige Abschnitt zusammen einstückig ausgebildet. "Einstückig" bedeutet, dass die Elemente ein aus einem Stück bestehendes Bauteil, das heißt ein integrales Bauteil, bilden. Auf diese Weise lässt sich die Schelle besonders einfach herstellen.

Insbesondere besteht das erste und/oder zweite Schellenteil aus Metall und ist insbesondere aus einem Metallband geformt. Die Stärke/Dicke des jeweiligen Schellenteils hat vorzugsweise einen Wert in einem Bereich von 0,5 bis 5 mm, bevorzugt von 0,75 bis 3 mm, besonders bevorzugt von 1 bis 2 mm. Das jeweilige Schellenteil ist dabei insbesondere ein Stanzbiegeteil. Das jeweilige Schellenteil und/oder der jeweilige schalenförmige Abschnitt und/oder der jeweilige Befestigungsabschnitt und/oder das Distanzwiderlager sind insbesondere durch Stanzen oder Stanzbiegen hergestellt. Die formgebenden Elemente des Schellenbandmaterials sind vorzugsweise so gewählt, dass diese nur auf der breiten Bandfläche, also der in radialer Richtung weisenden Oberfläche, liegen, und somit bei der Herstellung zusätzliche Abkantungen rechtwinklig zur radialen Oberfläche nicht notwendig sind. Mit anderen Worten weisen die seitlichen Kanten, insbesondere Schnittkanten, des schalenförmigen und/oder Befestigungsabschnitts des ersten und/oder zweiten Schellenteils in axialer Richtung, das heißt in Richtung der Ringmittelachse, und sind demnach nicht noch zusätzlich umgebogen. Insbesondere liegen die seitlichen Kanten (Schnittkanten) des schalenförmigen Abschnitts und des Befestigungsabschnitts des ersten und/oder zweiten Schellenteils in derselben Ebene.

Gemäß einer weiteren Ausgestaltung der Schelle der erfindungsgemäßen Verbindungsanordnung wird das Scharnier von einer Öffnung, insbesondere einer schlitzförmigen Öffnung, die am scharnierseitigen Ende des einen Schellenteils, zum Beispiel des ersten Schellenteils, ausgebildet ist, und von einer in die Öffnung eingeführten Lasche, die am scharnierseitigen Ende des jeweils anderen Schellenteils, zum Beispiel des zweiten Schellenteils, ausgebildet ist, sich also an den schalenförmigen Abschnitt dieses Schellenteils anschließt, gebildet. Ein solches Scharnier bzw. Gelenk lässt sich auf einfache Weise herstellen, insbesondere auch durch Stanzbiegen. Insbesondere ist kein separater Gelenkbolzen zur Verbindung der beiden Schellenteile nötig.

Gemäß noch einer Ausgestaltung der Schelle der erfindungsgemäßen Verbindungsanordnung ist der Abstand in Umfangsrichtung zwischen Scharnier und erstem Befestigungsabschnitt kleiner als der Abstand in Umfangsrichtung zwischen Scharnier und zweitem Befestigungsabschnitt. Mit anderen Worten ist das Scharnier nicht diametral gegenüberliegend von der Stelle angeordnet, an denen der jeweilige Befestigungsabschnitt mit dem schalenförmigen Abschnitt verbunden ist. Es handelt sich in diesem Fall bei den schalenförmigen Abschnitten also nicht um Halbschalen. Dies ermöglicht in einem stark begrenzten Installationsraum, beispielsweise innerhalb einer relativ schmalen Kabelrinne, relativ große Öffnungsweiten der Schelle.

Gemäß noch einer weiteren Ausgestaltung der Schelle der erfindungsgemäßen Verbindungsanordnung liegt an dem ersten schalenförmigen Abschnitt und dem zweiten schalenförmigen Abschnitt radial innenseitig eine Kunststoffeinlage, insbesondere Gummieinlage, an, die insbesondere von dem Bereich des ersten schalenförmigen Abschnitts in den Bereich des zweiten schalenförmigen Abschnitts übergeht, also innenseitig am Scharnier in Umfangsrichtung vorbeiführt, wobei die Kunststoffeinlage vorzugsweise die Schellenteile relativ zueinander in Richtung der Schließstellung vorspannt. Eine solche Kunststoffeinlage schützt die in der Schelle geführte Leitung vor mechanischer Beschädigung. Auch kann die Kunststoffeinlage im vorfixierten Zustand der Schelle ein unabsichtliches Verschieben der Schelle relativ zur Leitung in axialer Richtung verhindern. Außerdem erleichtert eine solche Kunststoffeinlage das Anlegen der Schelle an einer Leitung, wenn die Kunststoffeinlage eine Vorspannung in Richtung der Schließstellung bewirkt. Insbesondere sind ferner die seitlichen Kanten der schalenförmigen Abschnitte in das Material der Kunststoffeinlage eingebettet, das heißt davon ummantelt. Die Schellenteile können also auch zur Seite hin von der Kunststoffeinlage eingefasst sein, sodass sich die Schellenteile nicht relativ zur Kunststoffeinlage in axialer Richtung verschieben können. Die Kunststoffeinlage ist in Schließstellung insbesondere in Umfangsrichtung über einen Winkelbereich von mindestens 240 Grad, bevorzugt mindestens 270 Grad, besonders bevorzugt mindestens 320 Grad, innenseitig mit den beiden schalenförmigen Abschnitten bzw. dem Ring verbunden.

Gemäß wiederum einer weiteren Ausgestaltung der Schelle der erfindungsgemäßen Verbindungsanordnung beträgt das Verhältnis des maximalen Querschnitts, insbesondere Durchmessers, des Aufnahmeraums und/oder des Innendurchmessers des Rings zu der Breite (in axialer Richtung) des ersten und/oder zweiten schalenförmigen Abschnitts höchstens 3, bevorzugt höchstens 2, besonders bevorzugt höchstens 1,5. Auf diese Weise ist eine relativ große Anlagefläche zwischen Schelleninnenseite und Außenseite der Leitung garantiert.

Gemäß einer weiteren Ausgestaltung umgrenzt der Träger einen Leitungsaufnahmeraum, in den die Schelle mit einer (axial) durch die (in der Schließstellung befindlichen) Schelle geführten Leitung aufnehmbar ist, beispielsweise mit einem Gerüst einer Kabelleiter oder mit einer Kabelrinne, wobei die Schelle an einer Befestigungsfläche des Trägers befestigt ist und die Befestigungsabschnitte der Schelle zwischen der Befestigungsfläche und dem Aufnahmeraum der Schelle angeordnet sind.

Wie bereits angedeutet, kann eine solche Verbindungsanordnung dadurch hergestellt werden, dass eine Schelle der erfindungsgemäßen Verbindungsanordnung um eine Leitung gelegt wird, die zumindest abschnittsweise bereits entlang des Trägers, insbesondere in einer Kabelrinne, verläuft, wobei die Schelle zunächst (beispielsweise im Bereich einer Unterbrechung bzw. Eingriffslücke im Träger bzw. der Kabelrinne) an der Leitung durch Herstellen der Schnappverbindung vorfixiert wird und wobei dann die Schelle gegebenenfalls zusammen mit der Leitung im vorfixierten Zustand an dem Träger bzw. in der Kabelrinne in Verlaufsrichtung des Kabels an die endgültige Montageposition bewegt wird. Ein Distanzwiderlager kann dabei ein unbeabsichtigtes Drehen der Schelle bzw. der Öffnungen und der Befestigungsschnittstelle bzw. des Innengewindes gegenüber dem Träger verhindern. In der endgültigen Befestigungsposition braucht dann lediglich ein Befestigungsmittel, z.B. eine Schraube, zunächst durch den Träger, dann durch die Öffnung des ersten Befestigungsabschnitts und schließlich durch die Öffnung des zweiten Befestigungsabschnitts geführt und insbesondere in der Befestigungsschnittstelle bzw. dem Innengewinde, die/das an dem zweiten Befestigungsabschnitt, insbesondere in einer Gewindemuffe, vorgesehen sein kann, fixiert bzw. verschraubt werden.

Erfindungsgemäß ist also ein Befestigungsmittel, insbesondere eine Schraube, durch Öffnungen im ersten und zweiten Befestigungsabschnitt geführt und mit der Befestigungsschnittstelle bzw. dem Innengewinde verschraubt, wodurch sowohl die Schelle am Träger als auch die Schellenteile relativ zueinander in der Schließstellung fixiert sind. Bei der erfindungsgemäßen Verbindungsanordnung ist insbesondere vorgesehen, dass das Befestigungsmittel in einer Richtung von der Befestigungsfläche des Trägers zum ersten Befestigungsabschnitt und anschließend zum zweiten Befestigungsabschnitt durch die Öffnungen geführt ist, wobei die Befestigungsschnittstelle bzw. das Innengewinde insbesondere an dem zweiten Befestigungsabschnitt, vorzugsweise in einer am zweiten Befestigungsabschnitt fixierten Gewindemuffe, vorgesehen ist. Im Falle einer Schraube als Befestigungsmittel ist dann die Schraube in einer Richtung von dem ersten Befestigungsabschnitt bzw. Montageabschnitt zum zweiten Befestigungsabschnitt durch die Öffnungen geführt.

Die erfindungsgemäße Verbindungsanordnung ermöglicht eine relativ einfache Befestigung der Leitungen, wobei die Zugänglichkeit nur von einer Seite des Trägers notwendig ist. Weiterhin sind keine zusätzlichen Losteile außer dem Befestigungsmittel bzw. der Schraube und gegebenenfalls einer Sicherungs- bzw. Unterlegscheibe notwendig. Durch das nachträgliche Einlegen in eine offene Kabelleiter oder Kabelrinne ist die Leitung mechanisch geschützt und EMV-gerecht verlegt, ohne den Einsatz einer umfangreichen metallischen Schutzrohrverlegung, welche masseintensiv und arbeitsintensiv ist. Da die Schelle geteilt, insbesondere zweigeteilt ist, kann diese um große Querschnitte durch das Öffnen der Schelle umgelegt werden und mit dem Schnappverschluss vorfixiert werden, was alles durch ein einzelnes Bauteil ohne zusätzliches Verschrauben realisiert werden kann. Die Schelle wird erst bei der Befestigung, insbesondere über die integrierte Befestigungsschnittstelle, insbesondere das integrierte Innengewinde bzw. die integrierte Gewindemuffe, am Einbauort um die Leitung gespannt und gleichzeitig befestigt. Durch das Verspannen ist eine Kraftaufnahme der Schelle gegeben und das Leitungsmaterial gegen Verdrehungen und Verrutschen gesichert. Große Vorteile bestehen somit also in der einfachen Befestigung mit gleichzeitiger Vorspannung der Leitung ohne zusätzliche Anschweißteile oder Montageteile am Schienenfahrzeug und ohne die Notwendigkeit der Zugänglichkeit von mehreren Seiten. Auch ergibt sich eine Masseersparnis in der Leitungsverlegung, da eine aufwendige Rohrverlegung durch den Einsatz von leichten Kabelleitertrennstegen nicht mehr notwendig ist. Letzterer Vorteil ist besonders bei der heutigen Situation und Massebilanz bei Schienenfahrzeugen von großer Bedeutung.

Die erfindungsgemäße Verbindungsanordnung kann verschiedene Funktionen vereinigen:
- Fixierung und gleichzeitige Befestigung der Leitungen über eine einzige integrierte Befestigungsschnittstelle bzw. ein einziges integriertes Innengewinde, insbesondere eine integrierte Gewindemuffe,
- Vorklemmung (Vorfixierung) der Schelle über einen Schnappverschluss radial außerhalb des Schellenrings, um die Schelle bei einer über Kopf Montage verliersicher zu halten,
- leichtes Einlegen der Leitung durch die Scharnierlösung der geteilten Schelle und
- Verdrehsicherung der Schelle bei der Montage durch ein, insbesondere der Befestigungsschnittstelle, z.B. dem Innengewinde bzw. der Gewindemuffe, gegenüberliegendes Distanzwiderlager.

In der Zeichnung zeigen:
- Fig. 1a - e: verschiedene Ansichten einer Schelle der erfindungsgemäßen Verbindungsanordnung und
- Fig. 2a, 2b: verschiedene Ansichten einer erfindungsgemäßen Verbindungsanordnung.

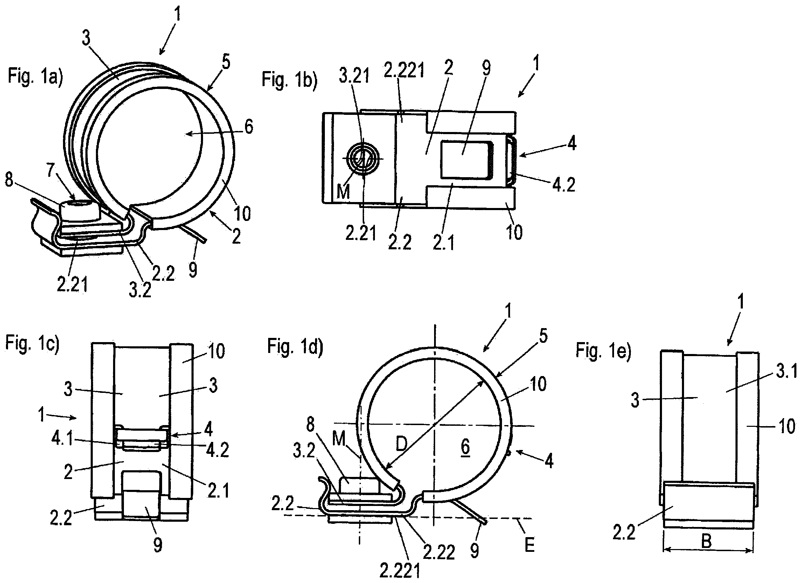

In Figur 1a ist in perspektivischer Ansicht eine Schelle 1 zur Befestigung einer Hochspannungsleitung 11 an einem Schienenfahrzeug dargestellt. Figur 1b zeigt eine Ansicht der Schelle 1 von unten, Figur 1c eine Ansicht von hinten, Figur 1d eine Ansicht von der Seite und Figur 1e eine Ansicht von vorne.

Die Schelle 1 weist zwei schwenkbar miteinander verbundene Schellenteile 2 und 3 auf, die hier jeweils aus Metall, insbesondere einem durch Stanzbiegen hergestellten Blechband, bestehen. Das erste Schellenteil 2 weist einen ersten schalenförmigen Abschnitt 2.1 und einen daran anschließenden ersten, hier laschenförmigen Befestigungsabschnitt 2.2 auf. Das zweite Schellenteil 3 weist einen zweiten schalenförmigen Abschnitt 3.1 und einen daran anschließenden zweiten, ebenfalls laschenförmigen Befestigungsabschnitt 3.2 auf. An einer von den Befestigungsabschnitten beabstandeten Stelle der Schelle 1 sind das erste und zweite Schellenteil 2 und 3 über ein Scharnier 4 schwenkbar miteinander verbunden und relativ zueinander zwischen einer Offenstellung und einer in den Figuren dargestellten Schließstellung bewegbar. In der Schließstellung bilden der erste und zweite schalenförmige Abschnitt 2.1 und 3.1 zusammen einen kreisförmigen Ring 5, das heißt die Innenkontur und/oder Außenkontur der schalenförmigen Abschnitte folgen einer Kreislinie. Der Ring 5 umschließt einen Aufnahmeraum 6 für die Hochspannungsleitung 11. Das Verhältnis des Innendurchmessers des Rings 5 zu der axialen Breite des ersten und zweiten schalenförmigen Abschnitts 2.1 und 3.1 ist hier beispielhaft 1,4.

Der erste und zweite Befestigungsabschnitt 2.2 und 3.2 erstrecken sich beide radial außerhalb des Rings 5 (radial außerhalb der kreislinienförmigen Außenkontur der schalenförmigen Abschnitte). Der zweite Befestigungsabschnitt 3.2 ist, bis auf den gebogenen Übergangsbereich zwischen dem schalenförmigen Abschnitt 3.1 und dem Befestigungsabschnitt 3.2 eben ausgebildet. Der erste Befestigungsabschnitt 2.2 weist einen ebenen Montageabschnitt 2.22 auf, der sich parallel zu dem zweiten Befestigungsabschnitt 3.2 erstreckt. In den parallel zueinander verlaufenden Bereichen der Befestigungsabschnitte sind in der Schließstellung zueinander fluchtende Öffnungen 2.21 und 3.21 vorgesehen, durch die eine Schraube 13 geführt werden kann, um die Schelle 1 an einem Träger 12 zu befestigen. Die Öffnung 2.21 des ersten Befestigungsabschnitts 2.2 ist innerhalb des Montageabschnitts 2.22 bzw. einer Montagefläche 2.221 des Montageabschnitts 2.22, die ein Auflager zur Festlegung der Schelle 1 bildet, angeordnet, wobei die von dem zweiten Befestigungsabschnitt 3.2 wegweisende Montagefläche 2.221 in einer Ebene E liegt, die radial außerhalb des Aufnahmeraums 6 und außerhalb des Rings 5 verläuft.

Figur 1d zeigt, dass in der Schließstellung eine Projektion der Montagefläche 2.221 in einer zur Montagefläche 2.221 senkrechten Richtung den Aufnahmeraum 6 schneidet. Insbesondere verläuft die Mittelachse M der Öffnungen 2.21 und 3.21 senkrecht zur Ebene E und schneidet die (im Weiteren noch beschriebene) Ummantelung der schalenförmigen Abschnitte. In Figur 1b ist erkennbar, dass die Projektion (Projektionsfläche) der Öffnungen 2.21 und 3.21 entlang der Mittelachse M und in Richtung vom ersten zum zweiten Befestigungsabschnitt den Ring 5 schneidet.

Die Figuren 1a und d zeigen ferner eine Gewindemuffe 8 mit einem Innengewinde 7, die an dem Befestigungsabschnitt 3.2 angeordnet und mit diesem stoffschlüssig verbunden ist, und zwar auf der von dem anderen Befestigungsabschnitt 2.2 wegweisenden Seite.

In dem Innengewinde 7 wird bei der späteren Befestigung der Schelle 1 die Schraube 13 verschraubt.

Ferner ist in Figur 1d eine zwischen dem ersten Befestigungsabschnitt 2.2 und dem zweiten Befestigungsabschnitt 3.2 vorgesehene Schnappverbindung erkennbar, die es ermöglicht, durch bloßes Verschwenken der beiden Schellenteile 2 und 3 relativ zueinander von der Offenstellung in die Schließstellung und umgekehrt (von der Schließstellung in die Offenstellung) die äußere Kante des zweiten Befestigungsabschnitts 3.2 an einem S-förmig gebogenen elastischen Endabschnitt des ersten Befestigungsabschnitts 2.2 vorbeizuführen. Der S-förmige Endabschnitt verläuft insbesondere winkelig, hier orthogonal, zu dem Montageabschnitt 2.22 bzw. der Montagefläche 2.221.

Außerdem zeigen die Figuren 1a bis d ein Distanzwiderlager 9, das sich radial außerhalb des Rings 5 erstreckt und durch Stanzbiegen aus dem schalenförmigen Abschnitt 2.1 des ersten Schellenteils 2 herausgebogen ist. Das Distanzwiderlager 9 ist, wie Figur 1b zeigt, mittig zwischen den axialen Seitenkanten des ersten schalenförmigen Abschnitts 2.1 angeordnet. Gemäß Figur 1d erstreckt sich die äußere Kante des Distanzwiderlagers 9 über die Ebene E hinaus, und zwar soweit wie eine (hier beispielhaft vorgesehene) Unterlegscheibe, die in Figur 1d unterhalb des Montageabschnitts 2.22 angeordnet ist und die im bestimmungsgemäß montierten Zustand zwischen dem Montageabschnitt 2.22 und dem Träger 12 angeordnet ist.

Die beiden schalenförmigen Abschnitte 2.1 und 3.1 sind jeweils mit den daran angrenzenden Befestigungsabschnitten 2.2 bzw. 3.2 einstückig aus Metall gebildet. Die schalenförmigen Abschnitte 2.1 und 3.1 sind über ein durch Zusammenstecken gebildetes Scharnier 4 schwenkbar miteinander verbunden. Das Scharnier ist in Figur 1c gut zu erkennen. Es besteht aus einer schlitzförmigen Öffnung 4.1 in dem schalenförmigen Abschnitt 2.1 und einer darin eingreifenden bzw. eingeführten Lasche 4.2, die am scharnierseitigen Ende des anderen schalenförmigen Abschnitts 3.1 angrenzt. In Figur 1d ist ferner zu erkennen, dass das Scharnier 4 nicht diametral gegenüberliegend zu den Befestigungsabschnitten 2.2 und 3.2 angeordnet ist, sondern (bezogen auf die Umfangsrichtung) näher an dem ersten Befestigungsabschnitt 2.2 als an dem zweiten Befestigungsabschnitt 3.2 liegt. Mit anderen Worten ist der Abstand in Umfangsrichtung zwischen dem Scharnier 4 und dem ersten Befestigungsabschnitt 2.2 kleiner als der Abstand in Umfangsrichtung zwischen dem Scharnier 4 und dem zweiten Befestigungsabschnitt 3.2.

Die beiden schalenförmigen Abschnitte 2.1 und 3.1 sind mit einer Gummieinlage 10 versehen, und zwar radial innenseitig sowie an den seitlichen Kanten und auch radial außenseitig im Randbereich. Wie in Figur 1a deutlich zu erkennen ist, sind die beiden schalenförmigen Abschnitte 2.1 und 3.1 seitlich vollständig in das Material der Gummieinlage 10 eingebettet. Die Gummieinlage 10 geht von dem Bereich des ersten schalenförmigen Abschnitts 2.1 in den Bereich des zweiten schalenförmigen Abschnitts 3.1 über und führt an dem Scharnier 4 innenseitig vorbei.

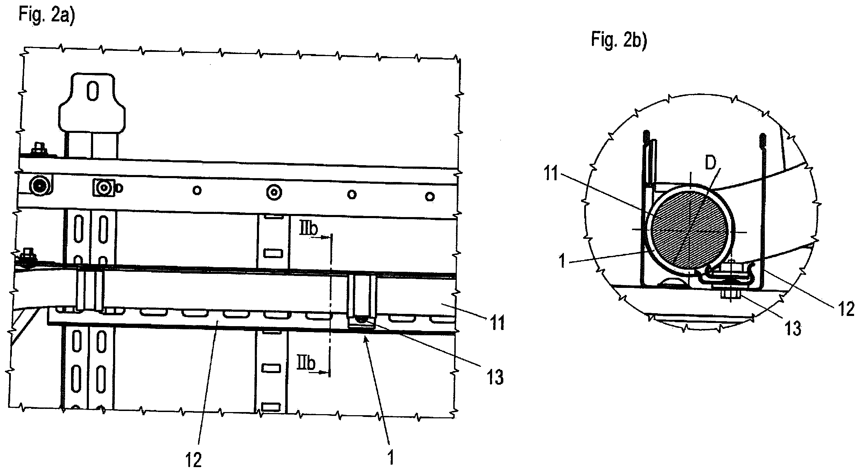

Die Figuren 2a und b zeigen ferner eine Verbindungsanordnung mit einer Schelle 1 des zuvor beschriebenen Typs (auf ein Distanzwiderlager wurde hier verzichtet). Die Verbindungsanordnung umfasst ferner eine Hochspannungsleitung 11, deren Außendurchmesser dem Innendurchmesser des Rings 5 entspricht. Die Schelle 1 ist über eine Schraube 13 an einem Träger 12 befestigt, der hier von einer Kabelrinne gebildet wird. Die Kabelrinne bzw. der Abstand zwischen den Seitenwänden ist, wie Figur 2b deutlich zeigt, nicht wesentlich breiter als die Querabmessung der Schelle (Abmessungen der Schelle in Richtung der Ebene E). Dennoch kann die Schelle 1 auf einfache Weise am Träger 12 unterseitig fixiert werden, indem nämlich zunächst eine Vorfixierung der Schelle 1 an der Leitung 11 über die erwähnte Schnappverbindung erfolgt und anschließend die Schelle 1 an der endgültigen Position innerhalb der Kabelrinne 12 mittels der Schraube 13 befestigt wird. Die Schraube 13 wird dabei von unten durch den Träger 12, dann durch die Öffnung 2.21 des ersten Befestigungsabschnitts 2.2, dann durch die Öffnung 3.21 des zweiten Befestigungsabschnitts 3.2 eingeführt und schließlich in das Innengewinde 7 der Gewindemuffe 8 gedreht. Durch das Verschrauben der Schelle 1 am Träger 12 wird nicht nur die Schelle 1 am Träger 12, sondern auch die Leitung 11 innerhalb der Schelle 1 fixiert.

## Patentansprüche

1. Verbindungsanordnung zur Befestigung einer Leitung, insbesondere stromführenden Leitung, an einem Schienenfahrzeug, mit einer Schelle (1) und einem Träger (12), an dem die Schelle (1) befestigt ist,
- wobei die Schelle (1) ein erstes Schellenteil (2), das einen ersten schalenförmigen Abschnitt (2.1) und einen daran anschließenden ersten Befestigungsabschnitt (2.2) aufweist,
- wobei die Schelle (1) ein zweites Schellenteil (3), das einen zweiten schalenförmigen Abschnitt (3.1) und einen daran anschließenden zweiten Befestigungsabschnitt (3.2) aufweist,
- wobei das erste und zweite Schellenteil (2, 3) miteinander verbunden und relativ zueinander zwischen einer Offenstellung und einer Schließstellung schwenkbar sind, wobei der erste und zweite schalenförmige Abschnitt (2.1, 3.1) in der Schließstellung zusammen einen Aufnahmeraum (6) umschließen und einen Ring (5) bilden, der den Aufnahmeraum (6) umschließt,
- wobei sich der erste und zweite Befestigungsabschnitt (2.2, 3.2) radial außerhalb des Aufnahmeraums (6) und des Rings (5) erstrecken und miteinander verbindbar ausgestaltet sind, und
- wobei der erste und zweite Befestigungsabschnitt (2.2, 3.2) jeweils eine Öffnung (2.21, 3.21) aufweisen, wobei die Öffnungen (2.21, 3.21) in der Schließstellung miteinander fluchten,
- wobei an einem der Befestigungsabschnitte (2.2, 3.2) ein zu der Öffnung (2.21, 3.21) dieses Befestigungsabschnitts (2.2, 3.2) koaxiales Innengewinde (7) vorgesehen ist, und wobei ein Befestigungsmittel (13) durch Öffnungen (2.21, 3.21) im ersten und zweiten Befestigungsabschnitt (2.2, 3.2) geführt und mit dem Innengewinde (7) verschraubt ist, wobei dadurch sowohl die Schelle (1) am Träger (12) als auch die Schellenteile (2, 3) relativ zueinander in der Schließstellung fixiert sind,
- wobei der erste Befestigungsabschnitt (2.2) einen Montageabschnitt (2.22) aufweist, der eine von dem zweiten Befestigungsabschnitt (3.2) wegweisende Montagefläche (2.221) umfasst, die ein Auflager zur Festlegung der Schelle (1) bildet,
- wobei in der Schließstellung eine Projektion der Montagefläche (2.221) in einer zur Montagefläche (2.221) senkrechten Richtung den Aufnahmeraum (6) schneidet und
- wobei die Projektion der Öffnung (2.21) des ersten Befestigungsabschnitts (2.2) entlang ihrer Mittelachse (M) den Ring (5) in der Schließstellung schneidet.

2. Verbindungsanordnung nach Anspruch 1, **dadurch gekennzeichnet, dass** die Montagefläche (2.221) des Montageabschnitts (2.22) des ersten Befestigungsabschnitts (2.2) in einer Ebene (E) liegt, die radial außerhalb des Rings (5) verläuft.

3. Verbindungsanordnung nach Anspruch 1 oder 2, **dadurch gekennzeichnet, dass** die Mittelachse (M) der Öffnung (2.21) des ersten Befestigungsabschnitts (2.2) den Ring (5) in der Schließstellung schneidet.

4. Verbindungsanordnung nach einem der vorangehenden Ansprüche, **dadurch gekennzeichnet,** der Befestigungsabschnitt, an dem das Innengewinde (7) vorgesehen ist, der zweite Befestigungsabschnitt(3.2) ist.

5. Verbindungsanordnung nach Anspruch 4, **dadurch gekennzeichnet, dass** das Innengewinde (7) Teil der Öffnung (2.21, 3.21) in dem Befestigungsabschnitt (2.2, 3.2) ist oder das Innengewinde in einer Gewindemuffe (8) vorgesehen ist, die an dem Befestigungsabschnitt (2.2, 3.2) angeordnet ist.

6. Verbindungsanordnung nach einem der vorangehenden Ansprüche, **dadurch gekennzeichnet, dass** der erste und zweite Befestigungsabschnitt (2.2, 3.2) in der Schließstellung zusammen eine Schnappverbindung bilden, die insbesondere allein durch Bewegen der Schellenteile (2, 3) relativ zueinander von der Schließstellung in die Offenstellung lösbar ist.

7. Verbindungsanordnung nach einem der vorangehenden Ansprüche, **dadurch gekennzeichnet, dass** einer der schalenförmigen Abschnitte (2.1, 3.1), insbesondere der schalenförmige Abschnitt (2.1) des ersten Schellenteils (2), mit einem Distanzwiderlager (9) verbunden ist, das sich radial außerhalb des Aufnahmeraums (6), insbesondere radial außerhalb des Rings (5), erstreckt.

8. Verbindungsanordnung nach einem der vorangehenden Ansprüche, **dadurch gekennzeichnet, dass** das erste und zweite Schellenteil (2, 3) über ein Scharnier (4) miteinander verbunden sind, wobei das Scharnier (4) insbesondere von einer Öffnung (4.1), vorzugsweise einer schlitzförmigen Öffnung (4.1), die am scharnierseitigen Ende des einen Schellenteils (2; 3) ausgebildet ist, und von einer in die Öffnung (4.1) eingeführten Lasche (4.2), die am scharnierseitigen Ende des jeweils anderen Schellenteils (3; 2) ausgebildet ist, gebildet wird.

9. Verbindungsanordnung nach Anspruch 8, **dadurch gekennzeichnet, dass** der Abstand in Umfangsrichtung zwischen dem Scharnier (4) und dem ersten Befestigungsabschnitt (2.2) kleiner als der Abstand in Umfangsrichtung zwischen dem Scharnier (4) und dem zweiten Befestigungsabschnitt (3.2) ist.

10. Verbindungsanordnung nach einem der vorangehenden Ansprüche, **dadurch gekennzeichnet, dass** an dem ersten schalenförmigen Abschnitt (2.1) und dem zweiten schalenförmigen Abschnitt (3.1) radial innenseitig eine Kunststoffeinlage (10), insbesondere Gummieinlage (10), anliegt, die insbesondere von dem Bereich des ersten schalenförmigen Abschnitts (2.1) in den Bereich des zweiten schalenförmigen Abschnitts (3.1) übergeht und vorzugsweise die Schellenteile (2, 3) relativ zueinander in Richtung der Schließstellung vorspannt.

11. Verbindungsanordnung nach einem der vorangehenden Ansprüche, **dadurch gekennzeichnet, dass** das Verhältnis der maximalen Querschnittslänge, insbesondere des Durchmessers (D), des Aufnahmeraums (6) und/oder des Innendurchmessers (D) des Rings (5) zu der Breite (B) des ersten und/oder zweiten schalenförmigen Abschnitts (2.1, 3.1) höchstens 3, bevorzugt höchstens 2, besonders bevorzugt höchstens 1,5, beträgt.

12. Verbindungsanordnung nach einem der vorangehenden Ansprüche
- wobei der Träger (12) einen Leitungsaufnahmeraum umgrenzt, in den die Schelle (1) mit einer durch die Schelle (1) geführten Leitung (11) aufnehmbar ist,
- wobei die Schelle (1) an einer Befestigungsfläche des Trägers (12) befestigt ist und die Befestigungsabschnitte (2.2, 3.2) der Schelle (1) zwischen der Befestigungsfläche und dem Aufnahmeraum (6) der Schelle (1) angeordnet sind.

13. Verbindungsanordnung nach einem der vorangehenden Ansprüche, **dadurch gekennzeichnet, dass** das Befestigungsmittel (13) in einer Richtung von der Befestigungsfläche des Trägers (12) zum ersten Befestigungsabschnitt (2.2) und anschließend zum zweiten Befestigungsabschnitt (3.2) durch die Öffnungen (2.21, 3.21) geführt ist, wobei das Innengewinde (7) insbesondere an dem zweiten Befestigungsabschnitt (3.2), vorzugsweise in einer am zweiten Befestigungsabschnitt (3.2) fixierten Gewindemuffe (8), vorgesehen ist.

## Claims

1. Connecting arrangement for fastening a line, in particular a line carrying current, on a rail vehicle, having a clip (1) and a carrier (12), on which the clip (1) is fastened,
- wherein the clip (1) comprises a first clip part (2), which has a first cup-shaped section (2.1) and a first fastening section (2.2) following on therefrom,
- wherein the clip (1) comprises a second clip part (3), which has a second cup-shaped section (3.1) and a second fastening section (3.2) following on therefrom,
- wherein the first and second clip parts (2, 3) are connected to one another and can be tilted relative to one another between an open position and a closed position, wherein the first and second cup-shaped sections (2.1, 3.1) in the closed position together enclose a reception space (6) and form a ring (5) which encloses the reception space (6),
- wherein the first and second fastening sections (2.2, 2.3) extend radially outside the reception space (6) and of the ring (5) and are configured to be connectable to one another, and
- wherein the first and second fastening sections (2.2, 2.3) respectively have an opening (2.21, 3.21), wherein the openings (2.21, 3.21) are flush with one another in the closed position,
- wherein on one of the fastening sections (2.2, 3.2), an internal screw thread (7) coaxial with the opening (2.21, 3.21) of this fastening section (2.2, 3.2) is provided, and wherein a fastening means (13) is fed through openings (2.21, 3.21) in the first and second fastening sections (2.2, 3.2) and is screwed to the internal screw thread (7), wherein by means of this both the clip (1) is fixed on the carrier (12) and the clip parts (2, 3) are fixed relative to one another in the closed position,
- wherein the first fastening section (2.2) has a mounting section (2.22), which comprises a mounting surface (2.221) that faces away from the second fastening section (3.2) and forms a basis for fastening the clip (1),
- wherein in the closed position, a projection of the mounting surface (2.221) in a direction perpendicular to the mounting surface (2.221) intersects the reception space (6), and
- wherein the projection of the opening (2.21) of the first fastening section (2.2) along its mid-axis (M) intersects the ring (5) in the closed position.

2. Connecting arrangement according to Claim 1, **characterised in that** the mounting surface (2.221) of the mounting section (2.22) of the first fastening section (2.2) lies in a plane (E) which extends radially outside the ring (5) .

3. Connecting arrangement according to Claim 1 or 2, **characterised in that** the mid-axis (M) of the opening (.21) of the first fastening section (2.2) intersects the ring (5) in the closed position.

4. Connecting arrangement according to any one of the preceding claims, **characterised in that** the fastening section on which the internal screw thread (7) is provided is the second fastening section (3.2).

5. Connecting arrangement according to Claim 4, **characterised in that** the internal screw thread (7) is part of the opening (2.21, 3.21) in the fastening section (2.2, 3.2), or the internal screw thread is provided in a threaded coupling (8) which is arranged on the fastening section (2.2, 3.2).

6. Connecting arrangement according to any one of the preceding claims, **characterised in that** the first and second fastening sections (2.2, 3.2) in the closed position together form a snap connection, which in particular can be released merely by movement of the clip parts (2, 3) relative to one another from the closed position into the open position.

7. Connecting arrangement according to any one of the preceding claims, **characterised in that** one of the cup-shaped sections (2.1, 341), in particular the cup-shaped section (2.1) of the first clip part (2), is connected to a spacing counter-bearing (9), extends radially outside the reception space (6), in particular radially outside the ring (5).

8. Connecting arrangement according to any one of the preceding claims, **characterised in that** the first and second clip parts (2, 3) are connected to one another by means of a hinge (4), wherein the hinge (4) is formed in particular by an opening (4.1), preferably a slit-shaped opening (4.1), which is formed on the hinge-side end of one of the clip parts (2; 3), and by a lug (4.2), which is inserted into the opening (4.1) and is formed on the hinge-side end of the other respective clip part (3; 2).

9. Connecting arrangement according to Claim 8, **characterised in that** the distance in the circumferential direction between the hinge (4) and the first fastening section (2.2) is less than the distance in the circumferential direction between the hinge (4) and the second fastening section (3.2).

10. Connecting arrangement according to any one of the preceding claims, **characterised in that** a plastic insert (10), in particular a rubber insert (10), which passes in particular from the region of the first cup-shaped section (2.1) into the region of the second cup-shaped section (31) and preferably prestresses the clip parts (2, 3) relative to one another in the closed position, bears radially inwards on the first cup-shaped section (2.1) and the second cup-shaped section (3.1).

11. Connecting arrangement according to any one of the preceding claims, **characterised in that** the ratio of the maximum cross-sectional length, in particular of the diameter (D), of the reception space (6) and/or of the internal diameter (D) of the ring (5) to the width (B) of the first and/or second cup-shaped section (2.1, 3.1) is at most 3, preferably at most 2, particularly preferably at most 1.5.

12. Connecting arrangement according to any one of the preceding claims,
- wherein the carrier (12) delimits a line reception space in which the clip (1) with a line (11) guided in the clip (1) can be received,
- wherein the clip (1) is fastened on a fastening surface of the carrier (12), and the fastening sections (2.2, 3.2) of the clip (1) are arranged between the fastening surface and the reception space (6) of the clip (1).

13. Connecting arrangement according to any one of the preceding claims, **characterised in that** the fastening means (13) is guided in a direction from the fastening surface (12) of the carrier to the first fastening section (2.2) and subsequently to the second fastening section (3.2) through the openings (2.21, 3.21), wherein the internal screw thread (7) is provided in particular on the second fastening section (3.2), preferably in a threaded coupling (8) fixed on the second fastening section (3.2).

## Revendications

1. Agencement de connexion servant à la fixation d'une ligne, en particulier d'une ligne conductrice de courant électrique, sur un véhicule ferroviaire, ledit agencement de connexion comprenant un collier (1) et un support (12) sur lequel est fixé le collier (1),
- où le collier (1) comprend un premier élément de collier (2) qui présente une première partie (2.1) en forme de coque et une première partie de fixation (2.2) se raccordant à ladite première partie en forme de coque,
- où le collier (1) comprend un second élément de collier (3) qui présente une seconde partie (3.1) en forme de coque et une seconde partie de fixation (3.2) se raccordant à ladite seconde partie en forme de coque,
- où le premier et le second élément de collier (2, 3) sont assemblés l'un à l'autre et peuvent pivoter l'un par rapport à l'autre entre une position d'ouverture et une position de fermeture, où la première et la seconde partie (2.1, 3.1) entourent ensemble un espace de logement (6), dans la position de fermeture, et forment un anneau (5) qui entoure l'espace de logement (6),
- où la première et la seconde partie de fixation (2.2, 3.2) s'étendent, dans le sens radial, à l'extérieur de l'espace de logement (6) et de l'anneau (5) et sont configurées en pouvant être assemblées l'une à l'autre, et
- où la première et la seconde partie de fixation (2.2, 3.2) présentent à chaque fois une ouverture (2.21, 3.21), où les ouvertures (2.21, 3.21) sont alignées l'une par rapport à l'autre dans la position de fermeture,
- où il est prévu, sur l'une des parties de fixation (2.2, 3.2), un filetage intérieur (7) disposé de façon coaxiale par rapport à l'ouverture (2.21, 3.21) de cette partie de fixation (2.2, 3.2), et où un moyen de fixation (13) est guidé, à travers des ouvertures (2.21, 3.21) se trouvant dans la première et la seconde partie de fixation (2.2, 3.2), et est vissé avec le filetage intérieur (7) où, en procédant de cette manière, le collier (1) est fixé sur le support (12), de même que les éléments de collier (2, 3) sont, aussi, fixés l'un par rapport à l'autre dans la position de fermeture,
- où la première partie de fixation (2.2) présente une partie de montage (2.22) qui comprend une surface de montage (2.221) s'écartant de la seconde partie de fixation (3.2), laquelle surface de montage forme un appui servant à la fixation du collier (1),
- où, dans la position de fermeture, une projection de la surface de montage (2.221) coupe l'espace de logement (6) dans une direction perpendiculaire à la surface de montage (2.221), et
- où la projection de l'ouverture (2.21) de la première partie de fixation (2.2) coupe l'anneau (5) le long de l'axe médian (M) de ladite ouverture, dans la position de fermeture.

2. Agencement de connexion selon la revendication 1, **caractérisé en ce que** la surface de montage (2.221) de la partie de montage (2.22) de la première partie de fixation (2.2) se trouve dans un plan (E) qui s'étend à l'extérieur de l'anneau (5), dans le sens radial.

3. Agencement de connexion selon la revendication 1 ou 2, **caractérisé en ce que** l'axe médian (M) de l'ouverture (2.21) de la première partie de fixation (2.2) coupe l'anneau (5) dans la position de fermeture.

4. Agencement de connexion selon l'une quelconque des revendications précédentes, **caractérisé en ce que** la partie de fixation, sur laquelle est prévu le filetage intérieur (7), est la seconde partie de fixation (3.2).

5. Agencement de connexion selon la revendication 4, **caractérisé en ce que** le filetage intérieur (7) fait partie de l'ouverture (2.21, 3.21) se trouvant dans la partie de fixation (2.2, 3.2), ou bien le filetage intérieur est prévu dans un manchon fileté (8) qui est disposé sur la partie de fixation (2.2, 3.2).

6. Agencement de connexion selon l'une quelconque des revendications précédentes, **caractérisé en ce que** la première et la seconde partie de fixation (2.2, 3.2) forment ensemble, dans la position de fermeture, un assemblage à encliquetage qui est détachable, en particulier seulement par un mouvement des éléments de collier (2, 3) l'un par rapport à l'autre, passant de la position de fermeture dans la position d'ouverture.

7. Agencement de connexion selon l'une quelconque des revendications précédentes, **caractérisé en ce que** l'une des parties (2.1, 3.1) en forme de coque, en particulier la partie (2.1) en forme de coque du premier élément de collier (2), est reliée à une butée d'espacement (9) qui s'étend à l'extérieur de l'espace de logement (6) dans le sens radial, en particulier à l'extérieur de l'anneau (5) dans le sens radial.

8. Agencement de connexion selon l'une quelconque des revendications précédentes, **caractérisé en ce que** le premier et le second élément de collier (2, 3) sont reliés l'un à l'autre par une charnière (4), où la charnière (4) est formée en particulier par une ouverture (4.1), de préférence par une ouverture (4.1) en forme de fente qui est configurée sur l'extrémité côté charnière de l'un des éléments de collier (2 ; 3), et qui est formée par une languette (4.2) introduite dans l'ouverture (4.1), languette qui est configurée sur l'extrémité côté charnière respectivement de l'autre élément de collier (3 ; 2).

9. Agencement de connexion selon la revendication 8, **caractérisé en ce que** l'espacement, dans la direction circonférentielle, compris entre la charnière (4) et la première partie de fixation (2.2), est plus petit que l'espacement, dans la direction circonférentielle, compris entre la charnière (4) et la seconde partie de fixation (3.2).

10. Agencement de connexion selon l'une quelconque des revendications précédentes, **caractérisé en ce qu'**une pièce intercalaire (10) en matière plastique, en particulier une pièce intercalaire (10) en caoutchouc, vient en appui, côté intérieur dans le sens radial, sur la première partie (2.1) en forme de coque et sur la seconde partie (3.1) en forme de coque, pièce intercalaire en caoutchouc qui passe, en particulier, de la zone de la première partie (2.1) en forme de coque, dans la zone de la seconde partie (3.1) en forme de coque et, de préférence, précontraint les éléments de collier (2, 3) l'un par rapport à l'autre dans la direction de la position de fermeture.

11. Agencement de connexion selon l'une quelconque des revendications précédentes, **caractérisé en ce que** le rapport de la longueur de section maximale, en particulier du diamètre (D), de l'espace de logement (6) et/ou du diamètre intérieur (D) de l'anneau (5), relativement à la largeur (B) de la première et/ou de la seconde partie (2.1, 3.1) en forme de coque, est au maximum égal à 3, de préférence au maximum égal à 2, de façon particulièrement préférable au maximum égal à 1,5.

12. Agencement de connexion selon l'une quelconque des revendications précédentes,
- où le support (12) délimite un espace de logement de ligne, espace dans lequel le collier (1) peut être logé avec une ligne (11) guidée à travers le collier (1),
- où le collier (1) est fixé sur une surface de fixation du support (12), et les parties de fixation (2.2, 3.2) du collier (1) sont disposées entre la surface de fixation et l'espace de logement (6) du collier (1).

13. Agencement de connexion selon l'une quelconque des revendications précédentes, **caractérisé en ce que** le moyen de fixation (13) est guidé, à travers les ouvertures (2.21, 3.21), dans une direction allant de la surface de fixation du support (12) jusqu'à la première partie de fixation (2.2), et ensuite, jusqu'à la seconde partie de fixation (3.2), où le filetage intérieur (7) est prévu en particulier sur la seconde partie de fixation (3.2), de préférence dans un manchon fileté (8) fixé sur la seconde partie de fixation (3.2).
